# EUROPÄISCHE PATENTSCHRIFT

(11) **EP 3 152 884 B1**
(45) Veröffentlichungstag und Bekanntmachung des Hinweises auf die Patenterteilung: **19.12.2018**
(21) Anmeldenummer: 15731523.5
(22) Anmeldetag: 01.06.2015
(51) Int. Cl.: H04L 29/06, H04L 12/721, H04L 12/707, G06F 9/54

(54) **VERFAHREN ZUR WEITERLEITUNG VON DATEN ZWISCHEN COMPUTERSYSTEMEN, COMPUTERNETZ-INFRASTRUKTUR SOWIE COMPUTERPROGRAMM-PRODUKT**
METHOD FOR FORWARDING DATA BETWEEN COMPUTER SYSTEMS, COMPUTER NETWORK INFRASTRUCTURE, AND COMPUTER PROGRAM PRODUCT
PROCÉDÉ DE TRANSFERT DE DONNÉES ENTRE DES SYSTÈMES INFORMATIQUES, INFRASTRUCTURE DE RÉSEAU D'ORDINATEURS ET PRODUIT-PROGRAMME D'ORDINATEUR

(30) Priorität: 03.06.2014 DE 102014107793
(43) Veröffentlichungstag der Anmeldung: 12.04.2017
(73) Patentinhaber: Fujitsu Technology Solutions Intellectual Property GmbH, 80807 München (DE)
(72) Erfinder: CLAES, Heinz-Josef, 61130 Nidderau (DE)
(74) Vertreter: Epping - Hermann - Fischer
(86) Internationale Anmeldenummer: PCT/EP2015/062160
(87) Internationale Veröffentlichungsnummer: WO 2015/185509

(56) Entgegenhaltungen:
- US-A1- 2011 307 789
- US-A1- 2013 223 237
- Anonymous: "Port knocking - Wikipedia, the free encyclopedia", , 6. Mai 2014 (2014-05-06), XP055210754, Gefunden im Internet: URL:https://web.archive.org/web/2014050601 5839/http://en.wikipedia.org/wiki/Port_kno cking [gefunden am 2015-09-02]
- Martin Krzywinski: "PORTKNOCKING - A system for stealthy authentication across closed ports. : IMPLEMENTATIONS : implementations", , 14. Februar 2014 (2014-02-14), XP055210757, Gefunden im Internet: URL:https://web.archive.org/web/2014021417 3854/http://www.portknocking.org/view/impl ementations [gefunden am 2015-09-02]

## Beschreibung

Die Erfindung betrifft ein Verfahren zur Weiterleitung von Daten zwischen abgesicherten Computersystemen in einer Computernetz-Infrastruktur, eine entsprechende Computernetz-Infrastruktur sowie ein Computerprogramm-Produkt, welches eingerichtet ist, bei dessen Ausführung ein entsprechendes Verfahren durchzuführen.

Verteilte Rechnernetze beziehungsweise sogenannte Computernetz-Infrastrukturen beschreiben eine Mehrzahl von Computersystemen, die über Datenverbindungen miteinander kommunizieren können. Dabei werden zum Teil vertrauliche Inhalte ausgetauscht, auf die nicht-autorisierte Personen keine Zugriffsmöglichkeit haben sollen. Insbesondere in Computernetz-Infrastrukturen, welche Server-Client-Topologien umfassen, werden vertrauliche Daten, zum Beispiel Kundendaten oder Benutzerdaten, zwischen dem Client und dem Server ausgetauscht, wobei ein Zugriff Dritter auf diese Daten unterbunden werden muss.

Herkömmliche Sicherheitsstrategien zur Erhöhung des Datenschutzes umfassen Vorschriften (Prozesse, die eingehalten werden sollen) oder Regeln (Gebote bzw. Verbote) für dritte Personen, beispielsweise Administratoren, wodurch nur ein eingeschränkter beziehungsweise kontrollierter Zugriff auf vertrauliche Daten möglich sein soll.

Andererseits sind technische Maßnahmen an beziehungsweise in den Computersystemen vorgesehen, welche eine physischen und/oder logischen Zugriff auf Computersysteme verhindern beziehungsweise auf autorisierte Personen einschränken sollen.

Derartige Ansätze zur Verbesserung des Datenschutzes sind zur Datensicherheit zwar förderlich, haben jedoch den Nachteil, dass sie in der Regel keine zwingenden Maßnahmen darstellen, um einen Zugriff auf vertrauliche Daten zu unterbinden.

Ferner arbeiten gängige Computernetz-Infrastrukturen für den Datenaustausch beziehungsweise zur Kommunikation untereinander mit Zugangsmöglichkeiten, beispielsweise über Netzwerk, beziehungsweise Möglichkeiten der Ansprechbarkeit von Diensten in den Computersystemen, welche die Computersysteme empfindlich gegen Angriffe von außen machen. Denn zu einer Ansprechbarkeit von Diensten ist ein laufendes Programm an einem oder mehreren Netzwerk-Ports eines Computersystems erforderlich. Dieses laufende Programm stellt eine potenzielle Sicherheitslücke für Angriffe von außen über Netzwerk dar.

Dabei besteht eine Gefahr darin, dass unter Umständen ein Angreifer (Cracker), der sich Zugang zu einem Computersystem verschafft, vertrauliche Daten auf diesem Computersystem abgreifen kann und/oder durch den Angriff Zugang zu weiteren Computersystemen in der Computernetz-Infrastruktur erlangt, z.B. weil er sich über eine manipulierte Signatur als vertrauenswürdig tarnt.

Andererseits besteht bei herkömmlichen Computernetz-Infrastrukturen insbesondere im IT-Dienstleistungssektor die Bestrebung, ein hochverfügbares Rechnernetz einzurichten, bei dem trotz eines Ausfalls von einzelnen Computersystemen oder Netzwerk-Verbindungen zwischen Computersystemen die generelle Funktionalität der Infrastruktur aufrecht erhalten bleiben soll. Dazu werden Daten redundant in der Computernetz-Infrastruktur übertragen bzw. verteilt, um im Falle eines Ausfalls einzelner Instanzen an anderer Stelle weiterverarbeitet werden zu können und gegebenenfalls eine Wiederherstellung vorbestimmter Zustände (Desaster Recovery) zu ermöglichen.

Die letztgenannten Maßnahmen können jedoch vor dem Hintergrund einer Datensicherheit beziehungsweise eines Zugriffs nicht-autorisierter Personen auf hochverfügbar verteilte Daten innerhalb der Computernetz-Infrastruktur problematisch sein, weil sicherheitsrelevante oder vertrauliche Daten auf eine Vielzahl von Computersystemen verteilt werden, die unter Umständen gegen Angriffe von außen nur unzureichend geschützt sind.

Die Patentanmeldung US 2013/223237 A1 offenbart die Weiterleitung von Daten entlang einer Kommunikationspfad-Struktur umfassend eine Mehrzahl von parallelen Teilpfaden.

Es ist eine Aufgabe der Erfindung, den Schutz vor unerlaubtem Zugriff auf insbesondere vertrauliche Daten innerhalb einer Computernetz-Infrastruktur durch technische Maßnahmen zu verbessern und dennoch eine zufriedenstellende Hochverfügbarkeit beziehungsweise Desaster-Fähigkeit der Computernetz-Infrastruktur zu gewährleisten.

Diese Aufgabe wird in einem ersten Aspekt durch ein Verfahren nach Anspruch 1 gelöst.

Danach wird ein Verfahren zur Weiterleitung von Daten zwischen abgesicherten Computersystemen in einer Computernetz-Infrastruktur beschrieben, wobei Daten-Pakete entlang einer vorbestimmten Kommunikationspfad-Struktur von einem Quell-Computersystem vermittels einer Gruppe von Vermittlungs-Computersystemen auf zumindest ein Ziel-Computersystem übertragen werden, wobei die Kommunikationspfad-Struktur eine Mehrzahl von parallelen Teilpfaden umfasst, und wobei sowohl das Quell-Computersystem als auch das Ziel-Computersystem vorbestimmte, für dieses Verfahren verwendete Netzwerk-Ports dauerhaft derart geschlossen halten, dass kein Verbindungsaufbau zum Quell-Computersystem oder zum Ziel-Computersystem von außen zugelassen wird und somit ein Zugriff über ein Netzwerk vermittels dieser Netzwerk-Ports dauerhaft während der Durchführung des Verfahrens verhindert wird. Allerdings können das Quell-Computersystem oder das Ziel-Computersystem eine Verbindung zu einem jeweiligen Vermittlungs-Computersystem aufbauen, um Daten-Pakete in dem Vermittlungs-Computersystem abzulegen oder von dort abzuholen.

Bei dem erläuterten Verfahren werden Daten-Pakete mehrfach über verschiedene Pfade, nämlich die parallelen Teilpfade der Kommunikationspfad-Struktur, vom Quell-Computersystem an das Ziel-Computersystem übertragen. Dadurch ist eine Redundanz der Pfade realisiert, welche eine Hochverfügbarkeit ermöglicht. Wenn ein Teilpfad oder ein Vermittlungs-Computersystem entlang eines Teilpfads ausfällt, kann eine Datenübertragung an das Ziel-Computersystem in den anderen Teilpfaden und Computersystemen erhalten werden. Auf diese Weise bleibt das Ziel-Computersystem beziehungsweise die Computernetz-Infrastruktur weiterhin in ihrer Funktionalität verfügbar. Dadurch wird eine Hochverfügbarkeit realisiert. Dennoch ermöglicht das Verfahren eine hohe Sicherheit gegen Manipulationen vor dem Hintergrund einer Datensicherheit der in der Kommunikationspfad-Struktur verteilten Daten-Pakete, weil sowohl Quell- als auch Ziel-Computersystem eingekapselt und abgesichert sind. Ein Zugriff über ein Netzwerk auf diese Computersysteme ist zumindest unter bestimmten Betriebsbedingungen (dauerhaft während der Durchführung des hier erläuterten Verfahrens) nicht möglich.

Der Begriff "vorbestimmte Netzwerk-Ports" bedeutet, dass sowohl im Quell- als auch im Ziel-Computersystem sämtliche oder nur ausgewählte sicherheitskritische Netzwerk-Ports, z.B. die für dieses Verfahren verwendeten Netzwerk-Ports, dauerhaft geschlossen sind.

Dies hat den Vorteil, dass sowohl auf dem Quell- als auch auf dem Ziel-Computersystem keine Programme eingerichtet bzw. erforderlich sind, die zum Zweck der Ansprechbarkeit beziehungsweise des Verbindungsaufbaus von außen die entsprechenden Netzwerk-Ports abhören (sogenanntes "listening") und eine potenzielle Sicherheitslücke (zum Beispiel durch Buffer-Overflow) bilden. Somit bedeutet der Begriff "geschlossene Netzwerk-Ports" in diesem Kontext, dass diese keine "listening ports" sind, d.h. kein Verbindungsaufbau von außen zugelassen wird. Ein Dritter ist in diesem Falle nicht in der Lage, sich von außen über Netzwerk am Quell-Computersystem oder am Ziel-Computersystem zu authentifizieren oder einzuloggen, zum Beispiel bei Unix-basierten Systemen über einen Secure-Shell- (SSH-)Daemon, oder spezielle Aktionen auf dem Quell- beziehungsweise Ziel-Computersystem durchzuführen.

Allerdings kann für eine erste Benutzergruppe ein lokaler Zugriff auf das Quell-Computersystem eingerichtet sein (z.B. für ein Sicherheitspersonal). Für eine zweite Benutzergruppe kann ein lokaler Zugriff auf das Ziel-Computersystem eingerichtet sein (z.B. für eine Endbenutzer-Gruppe oder Client-Gruppe). Vorteilhaft wird jedoch ein lokaler Zugriff der jeweiligen Benutzergruppe auf das jeweils andere Computersystem verhindert.

Im Unterschied zu dem Quell- und dem Ziel-Computersystem erlaubt das Verfahren jedoch einen Zugriff auf ein Vermittlungs-Computersystem aus der Gruppe der Vermittlungs-Computersysteme von außen. Ein jedes aus der Gruppe der Vermittlungs-Computersysteme ist dabei als "offenes" System mit wenigstens einem ansprechbaren offenen ("listening") Netzwerk-Port über Netzwerk zugänglich. Das bedeutet, dass auf einem Vermittlungs-Computersystem beispielsweise Programme laufen und/oder Applikationen vorbereitet sind, so dass das Quell-Computersystem, das Ziel-Computersystem oder andere Vermittlungs-Computersysteme auf ein jeweiliges Vermittlungs-Computersystem zugreifen können und eine Verbindung zum Vermittlungs-Computersystem aufbauen können, um Daten-Pakete gemäß dem vorgestellten Verfahren (über eine dann aufgebaute Verbindung, "established") in einem Vermittlungs-Computersystem abzulegen oder von dort abzuholen. Unter Sicherheitsaspekten ist ein solches "offenes" Vermittlungs-Computersystem ähnlich zu bewerten wie ein traditionelles, speziell abgesichertes Computersystem.

Somit dient ein jedes Vermittlungs-Computersystem als (abgesicherter, aber ansprechbarer) Vermittler für eine Kommunikation zwischen dem Quell-Computersystem und dem Ziel-Computersystem, welche jedoch selbst eingekapselt sind.

Daten-Pakete können im Quell-Computersystem mit wenigstens einem privaten Schlüssel signiert und ggf. mit einem öffentlichen Schlüssel des Ziel-Computersystems (zumindest partiell) verschlüsselt werden. Schlüssel oder Passphrasen zur Verschlüsselung bzw. Entschlüsselung werden dezentral und ausschließlich lokal verwendbar im Quell- bzw. Ziel-Computersystem eingesetzt. Letztere Computersysteme, in denen Daten letztlich verarbeitet werden, sind jedoch durch (dauerhaft) geschlossene Netzwerk-Ports gegen Angriffe von außen gesichert. Auf diese Weise ist eine erhöhte Sicherheit vertraulicher Daten in der Computernetz-Infrastruktur bei dennoch hochverfügbarer Kommunikation gewährleistet.

Vorteilhaft wird bei dem erläuterten Verfahren ein Daten-Paket vom Quell-Computersystem unmittelbar an zumindest zwei verschiedene Vermittlungs-Computersysteme übertragen. Bereits bei Start der Weiterleitung von Daten am Quell-Computersystem ist dadurch eine Redundanz geschaffen, wobei bei Ausfall eines beteiligten Vermittlungs-Computersystems ein Daten-Paket vom Quell-Computersystem vermittels wenigstens eines anderen Vermittlungs-Computersystems in der Kommunikationspfad-Struktur weiter übertragen werden kann.

Vorzugsweise wird bei dem Verfahren der erläuterten Art ein Daten-Paket nach Empfang durch ein Vermittlungs-Computersystem an eine Mehrzahl von in der Kommunikationspfad-Struktur nachfolgenden Computersystemen übertragen.

Die nachfolgenden Computersysteme können Vermittlungs- oder Ziel-Computersysteme sein. Auf diese Weise kann ein Daten-Paket von einem einzigen Computersystem an eine Mehrzahl von empfangenden Computersystemen weiterverteilt werden, wodurch eine Verteilung 1:n realisiert ist. Die genannten Maßnahmen sind auch iterativ denkbar, sodass eine kaskadierte Weiterverteilung, das heißt von einem aus der Mehrzahl der Empfänger wiederum an eine Mehrzahl von weiteren Computersystemen, erfolgt.

Ferner kann ein asynchrones Versenden erfolgen. Falls ein Computersystem nicht erreicht werden kann, wird ein Daten-Paket dennoch unabhängig davon an die anderen Computersysteme übertragen. Ferner können neben unterschiedlichen Empfangs-Computersystemen auch unterschiedliche Übertragungsverfahren eingesetzt werden (zum Beispiel über die Unix-basierten Befehle scp, rsync, speziell hierfür erstellte Übertragungsprotokolle, usw.).

Durch eine Weiterverteilung von Daten-Paketen an eine Mehrzahl von empfangenen Computersystemen gemäß einer Übertragung 1:n sind auch sogenannte "verschränkte" Pfade zwischen einzelnen Vermittlungs-Computersystemen innerhalb der Kommunikationspfad-Struktur möglich. Verschränkte Pfade sind in der Kommunikationspfad-Struktur zum Beispiel dadurch realisiert, dass ein erstes Vermittlungs-Computersystem ein Daten-Paket an ein zweites Vermittlungs-Computersystem überträgt und das erste Vermittlungs-Computersystem das Daten-Paket gleichzeitig selbst von eben diesem zweiten Vermittlungs-Computersystem empfängt. Auf diese Weise ergeben sich ein erster Teilpfad vom ersten Vermittlungs-Computersystem an das zweite Vermittlungs-Computersystem und ein zweiter Teilpfad vom zweiten Vermittlungs-Computersystem an das erste Vermittlungs-Computersystem.

Alternativ oder ergänzend können verschränkte Pfade dadurch realisiert sein, dass ein Daten-Paket von einer Mehrzahl von Vermittlungs-Computersystemen parallel an eine Mehrzahl von empfangenden Vermittlungs-Computersystemen übertragen wird. Dabei erhält ein empfangendes Vermittlungs-Computersystem ein Daten-Paket redundant über mehrere parallele Teilpfade von mehreren übertragenden Vermittlungs-Computersystemen.

Der große Vorteil verschränkter Pfade im obigen Sinne besteht darin, dass einzelne Vermittlungs-Computersysteme trotz Ausfalls eines in der Kommunikation davor liegenden Teilpfades erneut in die Kommunikation eingebunden werden können, weil diese Vermittlungs-Computersysteme redundant von einem anderen Vermittlungs-Computersystem in einem parallelen Teilpfad, quasi als Bypass, Daten-Pakete erhalten. Somit wirkt sich ein Ausfall in einem Teilpfad höchstens bis zum nächsten funktionsfähigen Vermittlungs-Computersystem dieses Teilpfades aus.

Auf diese Weise kann das Risiko eines Ausfalls, in dem ein Teilpfad der Kommunikationspfad-Struktur vollends in der Weiterleitung von Daten-Paketen versagt, erheblich reduziert werden und gleichzeitig die Hochverfügbarkeit eines Ziel-Computersystems innerhalb der Computernetz-Infrastruktur erheblich erhöht werden.

Aufgrund der Kommunikationspfad-Struktur mit parallelen redundanten Teilpfaden ergibt sich - wie oben erläutert - eine gewollte redundante Übertragung von Daten-Paketen mehrmals über verschiedene Pfade ans gleiche Ziel. Das bedeutet, dass Daten-Pakete mehrfach (repliziert) am Ziel ankommen. Eine Lösung für den Umgang dieser Daten-Pakete wäre, redundant übertragene Daten-Pakete in einem entsprechenden Ziel zu verwerfen.

Andere vorteilhafte Maßnahmen ergeben sich für ein Verfahren der erläuterten Art jedoch bei Durchführung der folgenden Schritte:
- Überprüfen, ob ein vorbestimmtes Daten-Paket bereits an ein Vermittlungs-Computersystem oder das Ziel-Computersystem übertragen worden ist oder gerade dorthin übertragen wird,
- Initiieren einer Übertragung des Daten-Paketes auf das entsprechende Computersystem, falls der obige Schritt des Überprüfens ergeben hat, dass das Daten-Paket noch nicht an das entsprechende Computersystem übertragen worden ist oder noch nicht gerade übertragen wird.

Aufgrund dieser Maßnahmen kann die übertragene Datenmenge innerhalb der Kommunikationspfad-Struktur reduziert werden. Denn was bereits übertragen ist oder wird, muss nicht zwingend nochmal übertragen werden. Somit stellt die Computernetz-Infrastruktur gemäß dem erläuterten Verfahren prinzipiell eine Redundanz zur Verfügung, so dass eine Hochverfügbarkeit gewährleistet ist. Eine tatsächliche Übertragung von Daten-Paketen muss jedoch unter bestimmten Umständen nicht redundant nochmal erfolgen, wenn das entsprechende Daten-Paket schon an einem entsprechenden Ziel-Computersystem oder einem entsprechenden empfangenden Vermittlungs-Computersystem angekommen ist. Auf diese Weise wird die Datenmenge im Verfahren reduziert.

Ein Überprüfen, ob ein vorbestimmtes Daten-Paket bereits an ein Vermittlungs-Computersystem oder das Ziel-Computersystem übertragen worden ist oder gerade dorthin übertragen wird, kann derart durchgeführt werden, dass ein Vermittlungs-Computersystem, welches ein Daten-Paket übertragen möchte, im zu empfangenden Computersystem einen Prozess anstößt, der dem anfragenden Vermittlungs-Computersystem eine Rückmeldung darüber gibt, ob ein Daten-Paket bereits im Ziel vorliegt oder nicht. Anhand dieser Rückmeldung kann das Vermittlungs-Computersystem, das senden möchte, entscheiden, ob es tatsächlich senden soll oder nicht.

Bevorzugt wird bei dem hier erläuterten Verfahren zum Überprüfen, ob ein vorbestimmtes Daten-Paket bereits an das entsprechende Computersystem übertragen worden ist oder gerade dorthin übertragen wird, eine vorbestimmte oder zufällige Zeitspanne abgewartet.

Ein Computersystem, das ein Daten-Paket an ein Ziel senden möchte, kann eine erste Zeitspanne abwarten, um danach zu überprüfen, ob bereits ein anderes redundantes Computersystem das entsprechende Daten-Paket überträgt. Falls nein, kann das abwartende Computersystem selbst übertragen. Falls ja, wird eine zweite Zeitspanne vom abwartenden Computersystem gewartet, bis die Übertragung des anderen Computersystems beendet ist. Danach erfolgt eine Überprüfung durch das abwartende Computersystem, ob die "Fremd-Übertragung" erfolgreich war. Falls ja, wird keine weitere Maßnahme durchgeführt. Falls nein, überträgt das abwartende Computersystem selbst.

In einer vorteilhaften Konstellation erfolgt bei dem Verfahren der erläuterten Art die Übertragung der Daten-Pakete innerhalb der Kommunikationspfad-Struktur entlang unterschiedlicher, voneinander logisch getrennter Netzwerk-Pfade. Dadurch wird nicht nur eine Redundanz und damit Hochverfügbarkeit der an der Kommunikation beteiligten Vermittlungs-Computersysteme erzielt, sondern auch einem möglichen Ausfall ganzer Netzwerk-Pfade Rechnung getragen. Denn eine Redundanz von Vermittlungs-Computersystemen alleine nützt nichts, wenn diese Computersysteme in einem einzigen Netzwerk kommunizieren. Wenn das ganze Netzwerk ausfällt, ist somit die gesamte nachgelagerte Kommunikation abgeschnitten.

Durch Einrichten einer Übertragung entlang logisch getrennter Netzwerk-Pfade ist neben der Hochverfügbarkeit auch eine Desaster-Fähigkeit realisiert, weil bei Ausfall eines Netzwerks Daten-Pakete entlang eines anderen Netzwerk-Pfades weiter übertragen und verarbeitet werden können oder gegebenenfalls ein bestimmter Zustand eines Computersystems an einem Standort, der über einen funktionierenden Netzwerk-Pfad angebunden ist, wiederhergestellt werden kann.

Vorteilhaft erfolgt in diesem Zusammenhang bei einem Verfahren der erläuterten Art die Übertragung von Daten-Paketen auf zumindest zwei Ziel-Computersysteme an unterschiedlichen Standorten. Auf diese Weise ist eine Desaster-Lösung realisiert (DR = engl.: Disaster Recovery).

Vorteilhaft erfolgt eine weitere Verarbeitung der Daten-Pakete im Ziel-Computersystem am zweiten Standort, wenn eine vorbestimmte Bedingung im Ziel-Computersystem am ersten Standort eintritt. Eine vorbestimmte Bedingung kann beispielsweise ein gravierendes Problem im Ziel-Computersystem am ersten Standort oder ein Totalausfall des Ziel-Computersystems am ersten Standort oder ein Ausfall im Kommunikationspfad zum ersten Standort hin sein. Daten im Ziel-Computersystem am zweiten Standort können beispielsweise "scharf" geschaltet, d.h. in einen aktiven Prozess verarbeitet werden, wenn eine derartige Bedingung im Ziel-Computersystem am ersten Standort eintritt.

Auf diese Weise ist - wie oben bereits erläutert - neben einer Redundanz des Transport von Daten-Paketen hin zu einem Ziel-Computersystem durch das Verfahren der erläuterten Art auch eine Desaster-Fähigkeit bzw. Behebung eines Desaster-Falles realisiert. Dabei ist eine Redundanz der ausführenden Ziel-Computersysteme ermöglicht, so dass ein Ausfall eines Ziel-Computersystems an einem Standort durch die Aufnahme der Funktionalität vermittels eines zweiten Ziel-Computersystems an einem zweiten Standort kompensiert werden kann.

Vorzugsweise werden bei einem Verfahren der erläuterten Art im Quell-Computersystem und/oder in der Gruppe der Vermittlungs-Computersysteme die folgenden Schritte durchgeführt:
- Aufrufen von Routing-Informationen, die in einem Daten-Paket hinterlegt sind, wobei die Routing-Informationen die vorbestimmte Kommunikationspfad-Struktur zwischen dem Quell-Computersystem, der Gruppe der Vermittlungs-Computersysteme und dem Ziel-Computersystem innerhalb der Computernetz-Infrastruktur definieren, und
- Ausführen der Übertragung an in der Kommunikationspfad-Struktur nachfolgende Computersysteme in Abhängigkeit von den aufgerufenen Routing-Informationen.

Die Routing-Informationen definieren die Kommunikationspfad-Struktur mit ihren parallelen Teilpfaden zwischen dem Quell-Computersystem, den Vermittlungs-Computersystemen und dem Ziel-Computersystem. Auf diese Weise ist die Kommunikationspfad-Struktur fest vorgegeben, wobei die beteiligten Computersysteme gemäß dem Verfahren der erläuterten Art einem fest vorgegebenen Rahmen der Weiterleitung von Daten-Paketen gehorchen.

Die Routing-Informationen sind vorteilhaft im Daten-Paket vorab definiert. Dies kann beispielsweise im Quell-Computersystem erfolgen (durch einen Benutzer des Quell-Computersystems) oder unabhängig davon in einem entfernten Computersystem (beispielsweise in einem sogenannten Key-Computersystem durch einen unabhängigen Sicherheitsbeauftragten).

Bevorzugt wird bei dem Verfahren der erläuterten Art ein Daten-Paket in wenigstens einem entlang der Kommunikationspfad-Struktur beteiligten Computersystem mit einer Kennung versehen oder eine bereits bestehende Kennung ergänzt.

Eine entsprechende Kennung des Daten-Paketes ermöglicht eine Nachverfolgbarkeit auch über mehrere Instanzen der Kommunikationspfad-Struktur hinweg (sogenanntes "tracing"). Ein Ergänzen der Kennung kann beispielsweise ein Versehen mit einem Zusatz sein. Dabei wird eine originäre Kennung einer ersten Instanz vorteilhaft derart ergänzt, dass die originäre Information unterscheidbar vom Zusatz erhalten bleibt und somit die Kennung auch über mehrere Stufen des Ergänzens hinweg eindeutig auf den Ursprung zurückführbar ist.

Vorteilhaft wird bei dem Verfahren der Verlauf von Daten-Paketen entlang der verschiedenen Teilpfade der Kommunikationspfad-Struktur über ein Monitoring anhand der Kennung überwacht und/oder eine Verweildauer der Daten-Pakete auf einem entlang der Kommunikationspfad-Struktur beteiligten Computersystem überwacht und/oder sämtliche Verfahrensschritte durch das Monitoring protokolliert.

Anhand der Kennung der Daten-Pakete in Verbindung mit den hinterlegten Routing-Informationen kann festgestellt werden, ob ein entsprechender Kommunikationspfad eingehalten wird und welche Computersysteme (erfolgreich) erreicht werden können und dürfen. Eine Verweildauer der Daten-Pakete auf einem vorbestimmten Computersystem kann zum Beispiel durch das Quell-Computersystem definiert werden oder originär in einem Daten-Paket durch eine andere Instanz (z.B. ein nicht näher spezifiziertes Key-Computersystem) hinterlegt sein. Ferner kann definiert werden, dass nach Ablauf der Verweildauer die Daten-Pakete nicht weitertransportiert werden dürfen oder können oder gegebenenfalls unbrauchbar werden. Gegebenenfalls können Alarmmeldungen erzeugt oder sonstige Maßnahmen ergriffen werden, welche über das Monitoring protokolliert werden.

Bevorzugt umfasst bei dem Verfahren der erläuterten Art das Übertragen der Daten-Pakete von einem aus der Gruppe der Vermittlungs-Computersysteme auf das Ziel-Computersystem die folgenden Schritte:
- Senden einer vorbestimmten Daten-Sequenz vom Vermittlungs-Computersystem an das Ziel-Computersystem, wobei die vorbestimmten Netzwerk-Ports des Ziel-Computersystems geschlossen sind und wobei die Daten-Sequenz in einer vorbestimmten Reihenfolge einen oder mehrere Netzwerk-Ports des Ziel-Computersystems anspricht,
- Überprüfen der gesendeten Daten-Sequenz auf Übereinstimmung mit einer vordefinierten Sequenz im Ziel-Computersystem, sowie
- Veranlassen des Übertragens der Daten-Pakete durch das Ziel-Computersystem, falls die Überprüfung der gesendeten Daten-Sequenz positiv ist.

Die hier aufgeführten zusätzlichen Verfahrensschritte haben den Vorteil, dass grundsätzlich die (für das Verfahren maßgeblichen) Netzwerk-Ports des Ziel-Computersystems - in oben erläutertem Sinne - geschlossen sind und einen Verbindungsaufbau zum Ziel-Computersystem von außen blockieren bzw. einen manipulativen Zugriff deutlich erschweren. Das Veranlassen des Übertragens der Daten-Pakete vermittels des Ziel-Computersystems kann ein automatisierter Prozess zum Übertragen der jeweiligen Daten-Pakete auf das Ziel-Computersystem (zum Beispiel über den Unix-basierten Befehl "Secure Copy", scp) sein. Gemäß dem Prozess baut das Ziel-Computersystem seinerseits eine Verbindung zum Vermittlungs-Computersystem auf und holt die Daten-Pakete ab. Dieser Prozess kann gestartet werden, nachdem eine vorbestimmte Daten-Sequenz an das Ziel-Computersystem gesendet wurde, falls diese Sequenz mit einer vordefinierten Sequenz übereinstimmt. Die IP-Adresse des Sequenz-sendenden Computersystems kann dabei statisch im Ziel-Computersystem vorgegeben oder dynamisch aus den dem Kernel des Ziel-Computersystems bekannten Quell-IP-Adressen möglicher Sequenz-sendender Computersysteme entnommen werden.

Ein derartiges Verfahren ist unter dem Begriff "Port-Knocking" (englisch: to knock = anklopfen) bekannt. Die vorgenannten Schritte können beispielsweise über einen sogenannten Knock-Daemon, also ein Programm, welches Port-Knocking ermöglicht, durchgeführt werden. Der Knock-Daemon sitzt an den Netzwerk-Ports des Ziel-Computersystems, überprüft die an das Ziel-Computersystem gesendete Daten-Sequenz und veranlasst gegebenenfalls (z.B. durch Starten eines Skriptes/Programmes) ein gesteuertes Übertragen der entsprechenden Daten-Pakete von einem Vermittlungs-Computersystem an das Ziel-Computersystem, wenn die gesendete Sequenz mit einer vordefinierten Sequenz übereinstimmt. Der oben beschriebene Ablauf ermöglicht somit das Übertragen/Kopieren der Daten-Pakete von einem Vermittlungs-Computersystem auf das Ziel-Computersystem, ohne dass das Ziel-Computersystem hierfür einen offenen Port mit einem ansprechbaren Programm vorhalten muss.

Alternativ oder ergänzend zum oben erläuterten Port-Knocking ist auch denkbar, dass das Ziel-Computersystem von sich aus in regelmäßigen Abständen bei einem Vermittlungs-Computersystem anfragt (Polling), ob eine oder mehrere auszutauschende Task-Dateien vorliegen. Ist dies der Fall, kann eine entsprechende Übertragung der Daten-Pakete vom Vermittlungs-Computersystem an das Ziel-Computersystem initiiert werden. Es ist auch denkbar, dass das Ziel-Computersystem ein Polling durchführt, wenn zum Beispiel eine bestimmte Zeitspanne überschritten wird, in der kein Port-Knocking durchgeführt worden ist. Probleme beim Port-Knocking können so erkannt werden und die Funktionalität bleibt erhalten.

Durch die erläuterten Maßnahmen ist eine Kommunikation zwischen abgesicherten Computersystemen (Quell- und Ziel-Computersystem) innerhalb der Computernetz-Infrastruktur via der Gruppe der Vermittlungs-Computersysteme möglich.

In einem zweiten Aspekt wird die obige Aufgabe durch eine Computernetz-Infrastruktur gelöst zumindest umfassend:
- ein Quell-Computersystem,
- ein Ziel-Computersystem und
- eine Gruppe von Vermittlungs-Computersystemen, wobei die Computersysteme eingerichtet sind, Daten-Pakete entlang einer vorbestimmten Kommunikationspfad-Struktur vom Quell-Computersystem vermittels der Gruppe der Vermittlungs-Computersysteme an das Ziel-Computersystem zu übertragen, wobei die Kommunikationspfad-Struktur eine Mehrzahl von parallelen Teilpfaden umfasst, und wobei das Quell-Computersystem und das Ziel-Computersystem jeweils eine Zugriffssteuereinheit aufweisen, die eingerichtet ist, vorbestimmte, für dieses Verfahren verwendete Netzwerk-Ports dauerhaft derart geschlossen zu halten, dass kein Verbindungsaufbau zum Quell-Computersystem oder zum Ziel-Computersystem von außen zugelassen wird und somit ein Zugriff über ein Netzwerk vermittels dieser Netzwerk-Ports dauerhaft verhindert ist, und
wobei das Quell-Computersystem oder das Ziel-Computersystem eingerichtet sind, eine Verbindung zu einem jeweiligen Vermittlungs-Computersystem aufzubauen, um Daten-Pakete in dem Vermittlungs-Computersystem abzulegen oder von dort abzuholen.

Vorteilhaft ist die Computernetz-Infrastruktur der erläuterten Art eingerichtet, ein Verfahren wie oben erläutert durchzuführen.

Sämtliche vorteilhaften Aspekte, Merkmale sowie Maßnahmen des oben erläuterten Verfahrens entsprechen strukturellen Merkmalen der Computernetz-Infrastruktur und finden analog Anwendung. Umgekehrt sind alle strukturellen Merkmale der Computernetz-Infrastruktur auf ein Verfahren der oben erläuterten Art anwendbar.

Ferner wird in einem weiteren Aspekt die obige Aufgabe durch ein Computerprogramm-Produkt gelöst, welches eingerichtet ist, auf einem oder mehreren Computersystemen ausgeführt zu werden und welches bei Ausführung ein Verfahren der oben erläuterten Art durchführt.

Weitere vorteilhafte Ausgestaltungen sind in den Unteransprüchen sowie in der nachfolgenden Figurenbeschreibung offenbart.

Die Erfindung wird anhand mehrerer Zeichnungen im Folgenden näher erläutert.

Es zeigen:
- Figur 1A: eine schematisierte Darstellung einer Computernetz-Infrastruktur zur Weiterleitung von Daten zwischen abgesicherten Computersystemen,
- Figur 1B: die Computernetz-Infrastruktur gemäß Figur 1A mit diversen Ablaufschritten,
- Figur 2: eine schematisierte Darstellung einer Computernetz-Infrastruktur gemäß einer weiteren Konfiguration zur Weiterleitung von Daten zwischen Computersystemen an verschiedenen Standorten,
- Figur 3: eine schematisierte Darstellung einer Computernetz-Infrastruktur gemäß einer weiteren Konfiguration zur Weiterleitung von Daten zwischen Computersystemen an verschiedenen Standorten,
- Figur 4: eine schematisierte Darstellung einer Computernetz-Infrastruktur gemäß einer weiteren Konfiguration zur Weiterleitung von Daten zwischen Computersystemen an verschiedenen Standorten sowie
- Figur 5: eine schematisierte Darstellung einer Computernetz-Infrastruktur gemäß einer weiteren Konfiguration zur Weiterleitung von Daten zwischen Computersystemen an verschiedenen Standorten.

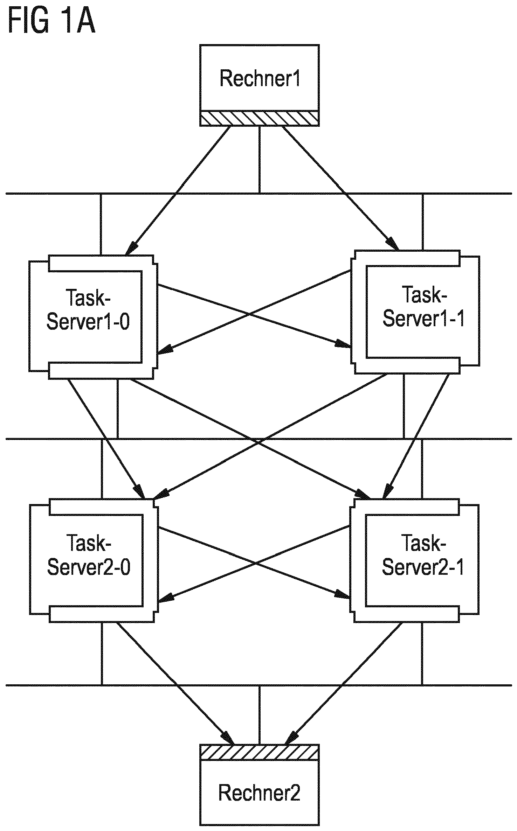

Figur 1A zeigt eine schematisierte Darstellung einer Computernetz-Infrastruktur, welche eingerichtet ist, ein Verfahren zur Weiterleitung von Daten zwischen abgesicherten Computersystemen durchzuführen.

Die Computernetz-Infrastruktur weist einen Rechner 1 als Quell-Computersystem und einen Rechner 2 als Ziel-Computersystem auf. Daten-Pakete können vom Rechner 1 entlang einer Gruppe von Vermittlungs-Computersystemen, in Figur 1A als Task-Server 1-0 bis Task-Server 2-1 bezeichnet, an den Rechner 2 übertragen werden. Die Übertragung der Daten-Pakete erfolgt dabei entlang einer vordefinierten Kommunikationspfad-Struktur, welche in Figur 1A durch eine Vielzahl von Pfeilen zwischen einzelnen Computersystemen dargestellt ist. Zur technischen Realisierung dieser Kommunikationspfad-Struktur sind sämtliche Rechner über Netzwerk-Pfade miteinander verbunden.

Die Kommunikationspfad-Struktur weist eine Mehrzahl von parallelen Teilpfaden auf, sodass Daten-Pakete zwischen dem Rechner 1 und dem Rechner 2 redundant auf beteiligte Computersysteme übertragen werden. Das bedeutet, dass ein Vermittlungs-Computersystem aus der Gruppe der Task-Server 1-0 bis 2-1 Daten-Pakete über mehrere parallele Teilpfade empfangen kann.

Bei Ausfall zumindest eines der Vermittlungs-Computersysteme Task-Server 1-0 bis 2-1 und/oder einer Netzwerk-Verbindung zwischen beteiligten Computersystemen kann die Übertragung von Daten-Paketen über andere Vermittlungs-Computersysteme auf anderen Teilpfaden der Kommunikationspfad-Struktur aufrechterhalten werden. Dadurch ist eine Hochverfügbarkeit der gesamten Computernetz-Infrastruktur insbesondere einer Weiterleitung von Daten-Paketen zwischen dem Rechner 1 und dem Rechner 2 gewährleistet.

Figur 1A zeigt eine sogenannte verschränkte Kommunikationspfad-Struktur. Das bedeutet, dass Daten-Pakete zwischen einer Mehrzahl von Computersystemen auf einer Ebene der Kommunikationspfad-Struktur (z.B. zwischen Task-Server 1-0 und Task-Server 1-1) ausgetauscht werden können sowie an eine Mehrzahl von in der Kommunikationspfad-Struktur nachfolgenden Computersystemen weitergegeben werden können (z.B. jeweils von Task-Server 1-0 bzw. Task-Server 1-1 an jeweils Task-Server 2-0 und Task-Server 2-1).

Eine derartige Struktur hat den Vorteil, dass bei Ausfall einer Netzwerk-Verbindung oder eines Computersystems das in der Kommunikationspfad-Struktur nachfolgende Computersystem über einen anderen Teilpfad der Kommunikationspfad-Struktur in die weitere Kommunikation mit einbezogen werden kann.

Wenn beispielsweise die Verbindung von Rechner 1 zu Task-Server 1-1 nicht verfügbar ist, wird Task-Server 1-1 durch Task-Server 1-0 in die Kommunikation mit einbezogen, weil Task-Server 1-0 ein empfangenes Daten-Paket neben den weiteren beteiligten Task-Servern 2-0 und 2-1 auch an Task-Server 1-1 übertragen kann und gegebenenfalls wird.

Liegt z.B. ein zusätzlicher Ausfall der Verbindung von Task-Server 1-0 zu Task-Server 2-0 vor, so kann Task-Server 1-1, welcher in die Kommunikation trotz Ausfalls der Verbindung zu Rechner 1 einbezogen wurde, ein Daten-Paket zu Task-Server 2-0 übermitteln, so dass letzterer ebenfalls in die redundante Kommunikation einbezogen ist.

Auf diese Weise ist die Computernetz-Infrastruktur gegen vielerlei Ausfallszenarien und -kombinationen beteiligter Computersysteme und/oder entsprechender zwischengelagerter Netzwerk-Verbindungen abgesichert.

Zur Datensicherheit innerhalb der Computernetz-Infrastruktur sind die Rechner 1 und 2 abgesicherte Computersysteme, welche zumindest sämtliche an dem hier beschriebenen Verfahren beteiligten Netzwerk-Ports geschlossen haben, wobei kein laufendes Programm an einem solchen Netzwerk-Port für eine Ansprechbarkeit der Rechner 1 und Rechner 2 von außen über Netzwerk eingerichtet ist und damit keine potenzielle Angreifbarkeit dieser Computersysteme eröffnet ist. Damit sind Rechner 1 und Rechner 2 vollständig eingekapselt. Dies ist in Figur 1A durch eine schraffierte Eingangs-/Ausgangs-Ebene der Rechner 1 und 2 dargestellt.

Im Gegensatz dazu sind die Vermittlungs-Computersysteme Task-Server 1-0 bis 2-1 offene Computersysteme mit jeweils zumindest einem offenen ("listening") Netzwerk-Port für eine Ansprechbarkeit über Netzwerk. Beispielsweise kann eine Netzwerk-Verbindung bei diesen Computersystemen über VPN ("Virtual Private Network") oder SSH ("Secure Shell") oder eine beliebige Kombination von derartigen Verfahren eingeschränkt sein, sodass nur vorbestimmte, verschlüsselte Netzwerk-Verbindungen mit dedizierten Computersystemen erlaubt sind.

Rechner 1 und Rechner 2 können jeweils einen oder mehrere der Task-Server 1-0 bis 2-1 über Netzwerk ansprechen. Eine Kommunikation zwischen den Computersystemen läuft wie folgt ab. Rechner 1 kann Daten-Pakete gemäß Figur 1A auf den Task-Servern 1-0 und 1-1 ablegen, weil letztere über Netzwerk unmittelbar ansprechbar sind. Die Daten-Pakete werden entlang der Kommunikationspfad-Struktur auf die weiteren Task-Server 2-0 und 2-1 redundant weiterverteilt.

Zur Übertragung von Daten-Paketen auf den Rechner 2 führen die Task-Server 2-0 beziehungsweise 2-1 jeweils einen Port-Knocking-Prozess auf den Rechner 2 durch. Dazu wird eine vorbestimmte Daten-Sequenz vom jeweiligen Task-Server 2-0 beziehungsweise 2-1 an den Rechner 2 übertragen, wobei der Rechner 2 mindestens sämtliche seiner an diesen Transfers beteiligten Netzwerk-Ports geschlossen hält. Ein Knock-Daemon an den Netzwerk-Ports des Rechners 2 überprüft die gesendete Daten-Sequenz auf Übereinstimmung mit einer vordefinierten Sequenz in Rechner 2.

Falls die Überprüfung der gesendeten Daten-Sequenz positiv ist, veranlasst Rechner 2 das Aufbauen einer Verbindung zum jeweiligen Task-Server 2-0 beziehungsweise 2-1 und das Übertragen der Daten-Pakete vom jeweiligen Task-Server 2-0 beziehungsweise 2-1. Ein derartiges Übertragen wird beispielsweise über den Unix-basierten Befehl "scp" realisiert. Auf diese Weise holt Rechner 2 Daten-Pakete nach einem Port-Knocking vom jeweiligen Task-Server 2-0 beziehungsweise 2-1 ab.

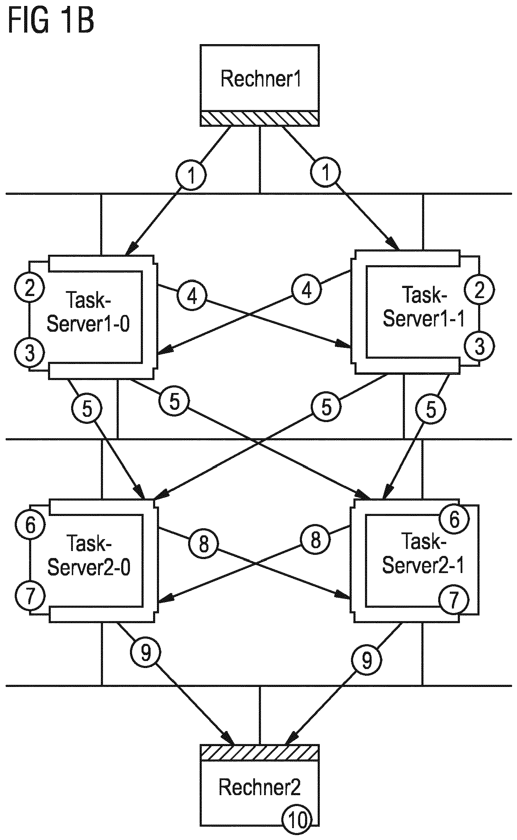

Figur 1B zeigt die Topologie gemäß Figur 1A, wobei Verfahrensschritte zur Weiterleitung von Daten-Paketen entlang der Kommunikationspfad-Struktur dargestellt sind und im Folgenden näher erläutert werden.

In einem Schritt 1 erfolgt eine parallele Übertragung eines Daten-Paketes vom Rechner 1 vermittels einer Netzwerk-Verbindung jeweils auf den Task-Server 1-0 und den Task-Server 1-1.

In einem Schritt 2 erfolgt in den Task-Servern 1-0 bzw. 1-1 jeweils eine lokale Überprüfung, ob das Daten-Paket bereits angekommen ist oder nicht. Diese Überprüfung wird ggf. wiederholt, bis das Daten-Paket (z.B. in einer dafür vorgesehenen "Inbox") in den jeweiligen Task-Servern 1-0 bzw. 1-1 eingegangen ist.

In einem weiteren Schritt 3 erfolgt ferner die Ermittlung eines weiteren Routings eines angekommenen Daten-Paketes. Vorbestimmte Routing-Informationen können hierzu im Daten-Paket hinterlegt sein, welche einen Kommunikationspfad des Daten-Paketes festlegen. In einem jeweiligen Task-Server 1-0 bzw. 1-1 kann ein Daten-Paket entpackt werden und die Routing-Informationen für ein Routing zu weiteren Computersystemen (Task-Server 1-0 bzw. 1-1 sowie 2-0 und 2-1) gelesen werden.

In einem jeweiligen Schritt 4 überprüfen die Task-Server 1-0 und 1-1 (z.B. nach Abwarten einer zufälligen Zeitspanne), ob das entsprechende Daten-Paket auf dem jeweils anderen Computersystem vollständig vorhanden ist. Hierzu kann beispielsweise der Task-Server 1-0 eine Anfrage an den Task-Server 1-1 senden und umgekehrt. Falls der Schritt 4 ergibt, dass in einem der beiden Computersysteme das Daten-Paket nicht vorhanden ist (z.B. weil eine Übertragung von Rechner 1 aus fehlgeschlagen ist), so wird das überprüfende Computersystem (zum Beispiel Task-Server 1-0 gegenüber Task-Server 1-1) gemäß einem zuvor aus dem Daten-Paket ermittelten Routing tätig und überträgt eine Replikation des Daten-Paketes an das Vermittlungs-Computersystem, in dem das Daten-Paket zuvor nicht vorhanden war (zum Beispiel Task-Server 1-1) .

Auf diese Weise kann beispielsweise der Task-Server 1-1 vermittels des Task-Servers 1-0 erneut in die Kommunikation und Weiterleitung von Daten-Paketen eingebunden werden, selbst wenn eine Übertragung eines Daten-Paketes vom Rechner 1 zu Task-Server 1-1 fehlgeschlagen ist.

In einem weiteren Schritt 5, welcher optional zeitgleich oder zeitversetzt zu Schritt 4 erfolgen kann, überprüfen die Task-Server 1-0 und 1-1 gegenüber den Task-Servern 2-0 beziehungsweise 2-1 jeweils, ob ein entsprechendes Daten-Paket in den letztgenannten Systemen bereits vorhanden ist (zum Beispiel weil es von dem jeweils anderen Vermittlungs-Computersystem Task-Server 1-0 beziehungsweise Task-Server 1-1 bereits dorthin übertragen worden ist).

Zur Überprüfung in diesem Schritt 5 kann beispielsweise der Task-Server 1-0 einen innerhalb eines vorgegebenen Rahmens zufälligen Zeitraum abwarten, bevor eine Anfrage an die zu empfangenden Vermittlungs-Computersysteme Task-Server 2-0 beziehungsweise 2-1 gerichtet wird. Dieser Zeitraum dient zum Abwarten, ob Task-Server 1-1 bereits eine Übertragung an die Task-Server 2-0 und/oder 2-1 initiiert hat.

Ist dies der Fall, so kann der Task-Server 1-0 einen weiteren Zeitraum abwarten, ob eine Übertragung von Task-Server 1-1 auf Task-Server 2-0 beziehungsweise 2-1 erfolgreich war.

In diesem Fall ergibt eine Überprüfung durch Task-Server 1-0, dass Daten-Pakete auf Task-Server 2-0 beziehungsweise 2-1 vorhanden sind, so dass Task-Server 1-0 nicht mehr übertragen muss.

Fand jedoch nach Abwarten des ersten Zeitraums keine Übertragung durch Task-Server 1-1 statt oder hat ein Abwarten des zweiten Zeitraums ergeben, dass eine Übertragung von Task-Server 1-1 aus fehlgeschlagen ist, so initiiert Task-Server 1-0 in Schritt 5 schließlich gemäß einem zuvor aus dem Daten-Paket ermittelten Routing eine Übertragung von weiteren Replikationen des Daten-Paketes auf die Task-Server 2-0 beziehungsweise 2-1.

Natürlich führt der Task-Server 1-1 gegenüber dem Task-Server 1-0 sowie gegenüber den Task-Servern 2-0 und 2-1 die gleichen Manöver aus, wie sie oben im Zusammenhang mit Task-Server 1-0 erläutert worden sind (Schritte 3, 4 und 5).

Ferner ist natürlich denkbar, dass von einem der Task-Server 1-0 beziehungsweise 1-1 auf einen der Task-Server 2-0 oder 2-1 eine Übertragung erfolgreich war, jedoch nicht auf den anderen der beteiligten Task-Server. Dann erfolgt ein Schritt 5 vom Task-Server 1-0 beziehungsweise 1-1 aus vorteilhaft auch nur gegenüber dem Task-Server 2-0 beziehungsweise 2-1, auf dem das Daten-Paket noch nicht vorhanden ist.

Auf diese Weise können Replikationen der Daten-Pakete redundant von den Task-Servern 1-0 beziehungsweise 1-1 auf die Task-Server 2-0 beziehungsweise 2-1 übertragen werden, so dass Daten-Pakete hochverfügbar in den jeweiligen Vermittlungs-Computersystemen (Task-Server 1-0 bis 2-1) vorhanden sind. Die oben erläuterten Maßnahmen erlauben jedoch eine Reduzierung der zu übertragenden Datenmenge, weil Daten-Pakete nicht mehr übertragen werden müssen, wenn sie schon auf dem jeweiligen Ziel-Computersystem vorhanden sind. Dies wird durch die oben erläuterten Maßnahmen der Überprüfung durchgeführt.

Analog zu den Maßnahmen, wie sie im Zusammenhang mit den Task-Servern 1-0 und 1-1 oben in Schritt 2 erläutert worden sind, überprüfen die Task-Server 2-0 und 2-1 in einem jeweiligen Schritt 6 lokal, ob ein Daten-Paket bei ihnen angekommen ist.

Weiterhin, analog zum Verfahren zwischen den Task-Servern 1-0 und 1-1 (vgl. Schritte 3 und 4 oben) ermitteln die Task-Server 2-0 beziehungsweise 2-1 in Schritt 7 ein weiteres Routing aus dem Daten-Paket und überprüfen in Schritt 8 untereinander, ob ein Daten-Paket auf das jeweils andere System erfolgreich übertragen worden ist und dort vollständig vorhanden ist.

Ist dies für eines der beteiligten Systeme Task-Server 2-0 beziehungsweise 2-1 nicht der Fall, so überträgt das jeweils andere System eine Replikation der Daten-Pakete auf das System, in dem das Daten-Paket noch nicht vorhanden ist.

In einem weiteren Schritt 9 überprüfen schließlich beide Task-Server 2-0 beziehungsweise 2-1, ob auf Rechner 2 (durch das jeweils andere System) bereits Daten-Pakete erfolgreich übertragen worden sind oder nicht.

Nachdem Rechner 2 mit für diesen Zweck geschlossenen Netzwerk-Ports eingekapselt ist, richten die Task-Server 2-0 beziehungsweise 2-1 jeweils einen Port-Knocking-Prozess an den Rechner 2, wobei dieser von sich aus die jeweiligen Task-Server 2-0 beziehungsweise 2-1 über Netzwerk anspricht und ihnen mitteilt, ob auf Rechner 2 bereits das Daten-Paket vorhanden ist oder nicht. Auch bei dem Überprüfungsprozess zwischen den Task-Servern 2-0 beziehungsweise 2-1 und dem Rechner 2, können die beteiligten Task-Server 2-0 und 2-1 jeweils vorbestimmte oder zufällige Zeiträume abwarten, wie oben im Zusammenhang mit den Task-Servern 1-0 beziehungsweise 1-1 erläutert. Falls im Rechner 2 ein Daten-Paket noch nicht vorhanden ist, so holt Rechner 2 in Schritt 9 von dem jeweiligen Task-Server 2-0 beziehungsweise 2-1 das Daten-Paket ab.

In Schritt 10 wird zuletzt in Rechner 2 lokal überprüft, ob das Daten-Paket erfolgreich übertragen worden ist und vollständig auf Rechner 2 vorhanden ist. Ist dies nicht der Fall, kann gegenüber einem der beteiligten Task-Server 2-0 beziehungsweise 2-1 oder gegenüber mehreren der beteiligten Task-Server erneut eine Übertragung des Daten-Paketes initiiert werden.

Die Figuren 1A und 1B stellen ein Szenario zur redundanten hochverfügbaren Weiterleitung von Daten-Paketen zwischen einem Rechner 1 und einem Rechner 2 vermittels der beteiligten Vermittlungs-Computersysteme Task-Server 1-0 bis 2-1 dar, wobei sämtliche Systeme über Netzwerke miteinander verbunden sind.

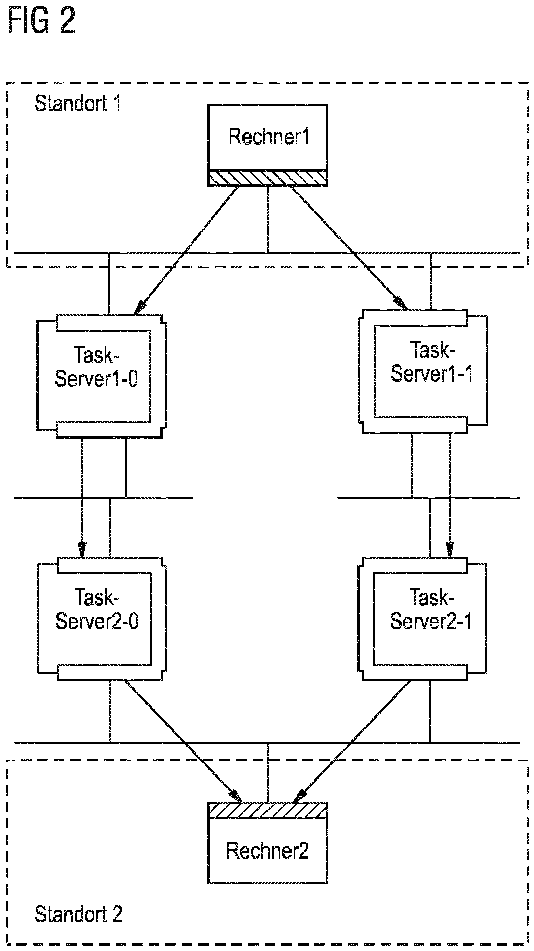

Figur 2 zeigt eine schematisierte Darstellung einer Computernetz-Infrastruktur gemäß einer weiteren Konfiguration. Dabei ist ein Rechner 1 an einem Standort 1 eingerichtet und ein Rechner 2 an einem Standort 2 eingerichtet. Die Standorte 1 und 2 können physisch (lokal) und/oder logisch getrennte Standorte sein. Daten-Pakete können vom Rechner vermittels einer Gruppe von Vermittlungs-Computersystemen Task-Server 1-0 bis 2-1 an den Rechner 2 übertragen werden.

Im Unterschied zur Konfiguration gemäß den Figuren 1A und 1B weist die Kommunikationspfad-Struktur zwischen dem Rechner 1 und dem Rechner 2 gemäß Figur 2 zwei logisch getrennte Netzwerk-Pfade auf. Ein erster Netzwerk-Pfad verbindet den Rechner 1 vermittels der Task-Server 1-0 sowie 2-0 mit dem Rechner 2. Ein zweiter Netzwerk-Pfad verbindet den Rechner 1 vermittels der Task-Server 1-1 und 2-1 mit dem Rechner 2. Auf diese Weise ist eine Computernetz-Infrastruktur gebildet, welche redundante Netzwerk-Pfade aufweist.

Die Task-Server 1-0 und 2-0 können an einem anderen Standort eingerichtet sein als die Task-Server 1-1 und 2-1. Auf diese Weise können Daten redundant über separate Netzwerk-Pfade an unterschiedlichen Lokationen vom Rechner 1 auf den Rechner 2 (Zielrechner) übertragen werden. Beispielsweise können Daten-Pakete über unterschiedliche Netz-Provider (jeweils ein Provider für die beiden separaten Netzwerk-Pfade) aus einem Rechenzentrum (vermittels Rechner 1) über unterschiedliche Zwischenstationen (zum Beispiel Task-Server 1-0 bzw. 2-0 an einem ersten Standort und Task-Server 1-1 bzw. 2-1 an einem zweiten Standort) geleitet werden. Optional können die entsprechenden Zwischenstationen (Task-Server 1-0 bis 2-1) auch an einem der Standorte von Rechner 1 beziehungsweise Rechner 2 sein. Verschiedene Konstellationen sind hier denkbar.

Die Konfiguration aus Figur 2 hat den Vorteil, dass bei Ausfall eines Netzwerks entlang eines Netzwerk-Pfades Daten-Pakete entlang des anderen Netzwerk-Pfades redundant weitergeleitet werden können.

Ebenso wie in der Konfiguration gemäß den Figuren 1A und 1B sind auch gemäß der Konfiguration in Figur 2 Rechner 1 und Rechner 2 durch geschlossene Netzwerk-Ports eingekapselt. Die Task-Server 1-0 bis 2-1 sind dagegen als "offene" Systeme von außen über Netzwerk ansprechbar. Eine Kommunikation und Weiterleitung von Daten-Paketen zwischen Rechner 1, den Task-Servern 1-0 bis 2-0 und Rechner 2 erfolgt analog zu den Erläuterungen gemäß Figur 1A und 1B.

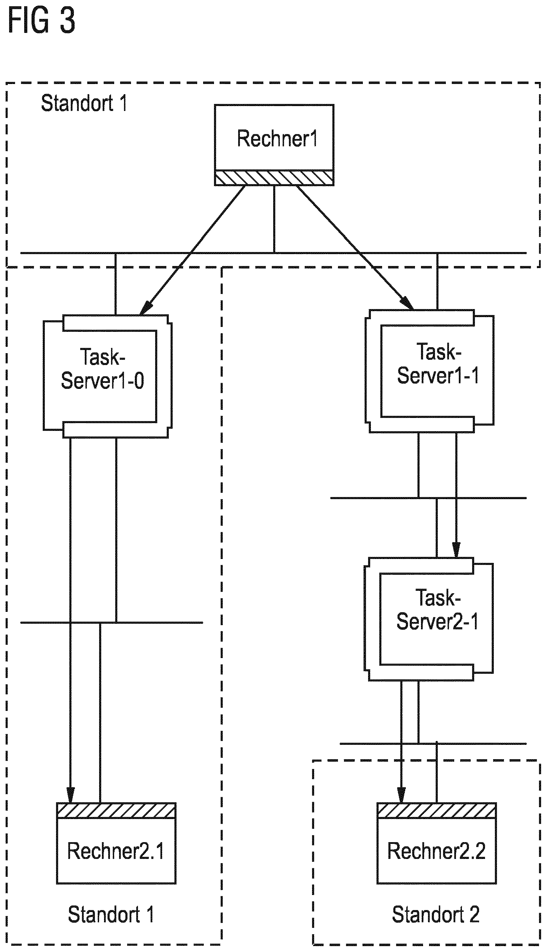

Figur 3 zeigt eine Konfiguration einer Computernetz-Infrastruktur zur Verteilung von Daten-Paketen an unterschiedliche Standorte für die Realisierung eines Desaster-Konzeptes.

Die Computernetz-Infrastruktur weist einen Rechner 1 als Quell-Computersystem von Daten-Paketen sowie zwei Ziel-Computersysteme Rechner 2.1 und Rechner 2.2 zum Empfangen weitergeleiteter Daten-Pakete auf. Zur Weiterleitung der Daten-Pakete zwischen Rechner 1 und den beteiligten Rechnern 2.1 sowie 2.2 sind Vermittlungs-Computersysteme Task-Server 1-0, Task-Server 1-1 sowie Task-Server 2-1 eingerichtet. Gemäß der Konfiguration aus Figur 3 sind die Rechner 1 und 2.1 sowie der Task-Server 1-0 an einem Standort 1 eingerichtet. Der Rechner 2.2 ist an einem Standort 2 eingerichtet.

Der Transport von Daten-Paketen zwischen dem Rechner 1 und dem Rechner 2.1 erfolgt vermittels des Task-Servers 1-0 entlang eines ersten Netzwerk-Pfades. Der Transport von Daten-Paketen zwischen dem Rechner 1 und dem Rechner 2.2 erfolgt vermittels der Task-Server 1-1 und 2-1 entlang eines zweiten separaten Netzwerk-Pfades.

Daten-Pakete werden somit von Rechner 1 am Standort 1 über unterschiedliche Anbindungen zu einem Rechner 2.1 am Standort 1 und zusätzlich zu einem Rechner 2.2 am Standort 2 transportiert. Der Standort 2 kann einen sogenannten Desaster-Recovery-Standort bilden. Das bedeutet, dass bei gravierenden Problemen des Rechners 2.1 am Standort 1 Daten funktional in Standort 2 "scharf" geschaltet werden können. Beispielsweise kann bei Ausfall des Rechners 2.1 am Standort 1 oder bei fehlerhafter oder unvollständiger Übertragung von Daten-Paketen zu Rechner 2.1 am Standort 1 eine Funktionalität der Computernetz-Infrastruktur vermittels einer Aktivierung des Rechners 2.2 am Standort 2 und/oder einer Wiederherstellung oder Ausführung von Daten-Paketen im Rechner 2.2 am Standort 2 aufrecht erhalten werden.

Somit erlaubt die Konfiguration gemäß Figur 3 eine Desaster-Fähigkeit zur Kompensation eines Ausfalls eines Ziel-Computersystems durch Aufnahme der Funktionalität in einem weiteren Ziel-Computersystem, welches Daten-Pakete auf redundanten Netzwerk-Pfaden von einem Quell-Computersystem erhalten hat.

Alternativ zu der in Figur 3 dargestellten Konfiguration sind vielerlei Variationen in der Verwendung von Task-Servern und abgeschotteten Rechnern, welche keine offenen Netzwerk-Ports aufweisen, denkbar. Die Anzahl der verwendeten Task-Server und deren Lokalisierung, insbesondere bei einem Transport von Daten-Paketen von Rechner 1 zu Rechner 2.2, können - je nach Anforderungen - variieren. Im Ausführungsbeispiel gemäß Figur 3 könnten die Task-Server 1-1 und 2-1 beispielsweise auch in Standort 1 oder in Standort 2 lokalisiert sein oder gegebenenfalls auch entfallen.

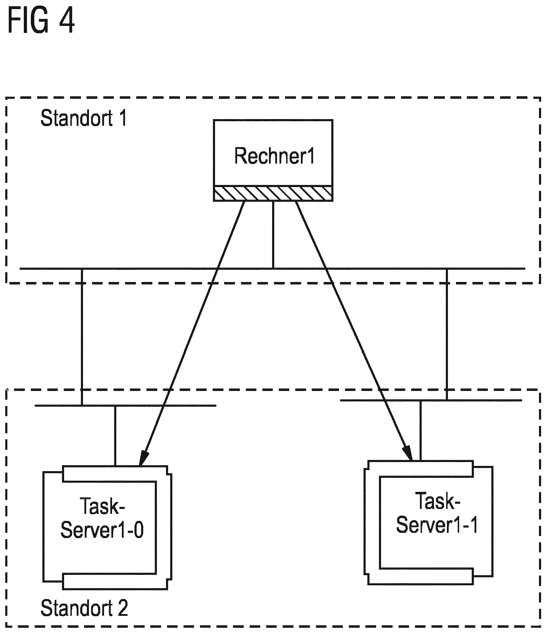

Figur 4 zeigt eine weitere Konfiguration eines Teils einer Computernetz-Infrastruktur mit einem Rechner 1, welcher eingekapselt ist (also keine offenen Netzwerk-Ports aufweist) und an einem Standort 1 untergebracht ist. An einem getrennten Standort 2 sind zwei Vermittlungs-Computersysteme Task-Server 1-0 und 1-1 eingerichtet, welche über separate Netzwerk-Pfade von Rechner 1 angesprochen werden können. Die Konfiguration gemäß Figur 4 erlaubt eine Weiterleitung von einem ersten Standort 1 an einen zweiten Standort 2 vermittels separater Netzwerk-Pfade. Falls ein Netzwerk-Pfad ausfällt, so steht redundant ein weiterer Netzwerk-Pfad zur Weiterleitung von Daten-Paketen zur Verfügung.

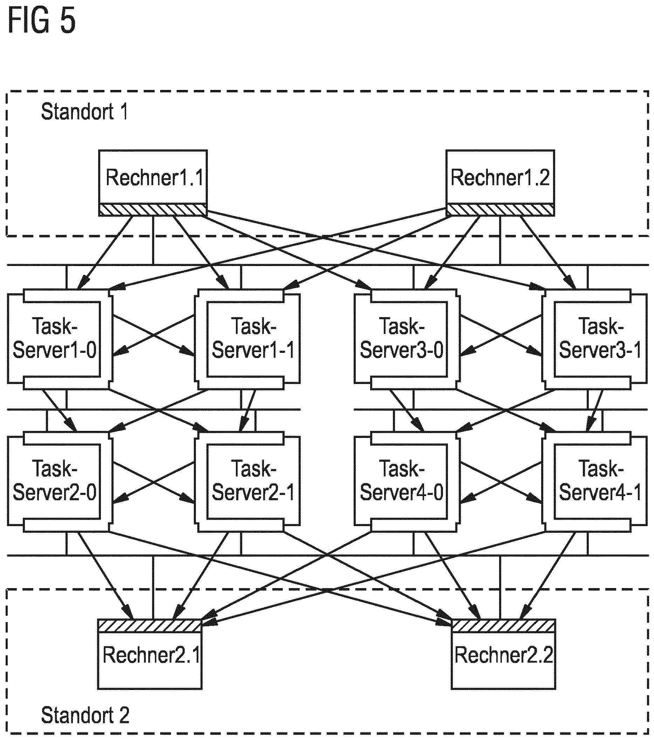

Figur 5 zeigt eine schematisierte Darstellung einer weiteren Konfiguration einer Computernetz-Infrastruktur, bei der sowohl redundante Netzwerk-Pfade als auch eine redundante Weiterleitung von Daten-Paketen zwischen verschiedenen Vermittlungs-Computersystemen innerhalb eines jeweiligen Netzwerk-Pfades eingerichtet sind.

Konkret umfasst die Computernetz-Infrastruktur gemäß Figur 5 zwei Quell-Computersysteme Rechner 1.1 sowie Rechner 1.2. Ferner sind zwei Ziel-Computersysteme Rechner 2.1 und Rechner 2.2 eingerichtet.

Die Quell-Computersysteme Rechner 1.1 und Rechner 1.2 sind an einem Standort 1 eingerichtet. Die Ziel-Computersysteme Rechner 2.1 und Rechner 2.2 sind an einem Standort 2 eingerichtet.

Eine Weiterleitung von Daten-Paketen zwischen dem Standort 1 und dem Standort 2 wird vermittels zweier Gruppen von Vermittlungs-Computersystemen durchgeführt, wobei jeweils eine Gruppe einer Netzwerk-Pfad-Struktur zugeordnet ist.

Eine erste Gruppe von Vermittlungs-Computersystemen ist durch die Task-Server 1-0 bis 2-1 gebildet, welche innerhalb eines ersten Netzwerk-Pfades miteinander kommunizieren können.

Eine zweite Gruppe von Vermittlungs-Computersystemen ist durch die Task-Server 3-0 bis 4-1 gebildet, welche innerhalb eines zweiten Netzwerk-Pfades miteinander kommunizieren können.

Eine jeweilige Gruppe von Vermittlungs-Computersystemen innerhalb eines Netzwerk-Pfades kann Daten-Pakete redundant gegenseitig austauschen, wie zu Figur 1A und 1B oben erläutert. Somit ist in jeder der beiden Gruppen von Vermittlungs-Computersystemen eine Hochverfügbarkeit realisiert.

Durch die gleichzeitig redundante Vorhaltung zweier Netzwerk-Pfade ist ferner gewährleistet, dass bei Ausfall eines kompletten Netzwerk-Pfades ein redundanter Netzwerk-Pfad zur hochverfügbaren Weiterleitung von Daten-Paketen an den Standort 2 eingerichtet ist. Daten-Pakete werden redundant von den beiden Quell-Computersystemen Rechner 1.1 und Rechner 1.2 an sämtliche aus den beiden Gruppen der Vermittlungs-Computersysteme Task-Server 1-0 bis Task-Server 2-1 beziehungsweise Task-Server 3-0 bis Task-Server 4-1 weitergeleitet und innerhalb der Gruppen der Vermittlungs-Computersystem redundant ausgetauscht. Eine Weiterleitung an die Ziel-Computersysteme Rechner 2.1 beziehungsweise Rechner 2.2 am Standort 2 erfolgt in redundanter Weise.

Somit stellt die Konfiguration gemäß Figur 5 quasi eine Verknüpfung der Konfigurationen aus Figur 1A und 1B in Verbindung mit Figur 2 und/oder Figur 3 dar.

Generell können sämtliche Konfigurationen, wie sie in den Figuren 1A bis 5 dargestellt sind, in Bezug zu Hochverfügbarkeit beziehungsweise Desaster-Fähigkeit kombiniert, variiert und ergänzt werden.

Sämtliche Konfigurationen haben den Vorteil, dass eine Hochverfügbarkeit beziehungsweise Desaster-Fähigkeit mit einer Datensicherheit durch ein Kommunikationsverfahren zwischen eingekapselten Quell- beziehungsweise Ziel-Computersystemen kombiniert ist.

### Bezugszeichenliste

- Rechner 1: Quell-Computersystem
- Rechner 1.1: Quell-Computersystem
- Rechner 1.2: Quell-Computersystem

- Rechner 2: Ziel-Computersystem
- Rechner 2.1: Ziel-Computersystem
- Rechner 2.2: Ziel-Computersystem

- Task-Server 1-0: Vermittlungs-Computersystem
- Task-Server 1-1: Vermittlungs-Computersystem
- Task-Server 2-0: Vermittlungs-Computersystem
- Task-Server 2-1: Vermittlungs-Computersystem
- Task-Server 3-0: Vermittlungs-Computersystem
- Task-Server 3-1: Vermittlungs-Computersystem
- Task-Server 4-0: Vermittlungs-Computersystem
- Task-Server 4-1: Vermittlungs-Computersystem

- 1 bis 10: Verfahrensschritte

## Patentansprüche

1. Verfahren zur Weiterleitung von Daten zwischen abgesicherten Computersystemen in einer Computernetz-Infrastruktur, wobei Daten-Pakete entlang einer vorbestimmten Kommunikationspfad-Struktur von einem Quell-Computersystem vermittels einer Gruppe von Vermittlungs-Computersystemen auf zumindest ein Ziel-Computersystem übertragen werden,
wobei die Kommunikationspfad-Struktur eine Mehrzahl von parallelen Teilpfaden umfasst, und
wobei sowohl das Quell-Computersystem als auch das Ziel-Computersystem vorbestimmte, für dieses Verfahren verwendete Netzwerk-Ports dauerhaft derart geschlossen halten, dass kein Verbindungsaufbau zum Quell-Computersystem oder zum Ziel-Computersystem von außen zugelassen wird und somit ein Zugriff über ein Netzwerk vermittels dieser Netzwerk-Ports dauerhaft während der Durchführung des Verfahrens verhindert wird,
wobei jedoch das Quell-Computersystem oder das Ziel-Computersystem eine Verbindung zu einem jeweiligen Vermittlungs-Computersystem aufbauen können, um Daten-Pakete in dem Vermittlungs-Computersystem abzulegen oder von dort abzuholen.

2. Verfahren nach Anspruch 1, wobei ein Daten-Paket vom Quell-Computersystem unmittelbar an zumindest zwei verschiedene Vermittlungs-Computersysteme übertragen wird.

3. Verfahren nach Anspruch 1 oder 2, wobei ein Daten-Paket nach Empfang durch ein Vermittlungs-Computersystem an eine Mehrzahl von in der Kommunikationspfad-Struktur nachfolgenden Computersystemen übertragen wird.

4. Verfahren nach einem der Ansprüche 1 bis 3, wobei die folgenden Schritte durchgeführt werden:
- Überprüfen, ob ein vorbestimmtes Daten-Paket bereits an ein Vermittlungs-Computersystem oder das Ziel-Computersystem übertragen worden ist oder gerade dorthin übertragen wird,
- Initiieren einer Übertragung des Daten-Paketes auf das entsprechende Computersystem, falls der obige Schritt des Überprüfens ergeben hat, dass das Daten-Paket noch nicht an das entsprechende Computersystem übertragen worden ist oder noch nicht gerade übertragen wird.

5. Verfahren nach Anspruch 4, wobei zum Überprüfen, ob ein vorbestimmtes Daten-Paket bereits an das entsprechende Computersystem übertragen worden ist oder gerade dorthin übertragen wird, eine vorbestimmte oder zufällige Zeitspanne abgewartet wird.

6. Verfahren nach einem der Ansprüche 1 bis 5, wobei die Übertragung der Daten-Pakete innerhalb der Kommunikationspfad-Struktur entlang unterschiedlicher, voneinander logisch getrennter Netzwerk-Pfade erfolgt.

7. Verfahren nach Anspruch 6, wobei die Übertragung der Daten-Pakete innerhalb der Kommunikationspfad-Struktur zwischen logisch und/oder physisch getrennten Standorten der beteiligten Computersysteme erfolgt.

8. Verfahren nach Anspruch 7, wobei die Übertragung der Daten-Pakete auf zumindest zwei Ziel-Computersysteme an unterschiedlichen Standorten erfolgt, wobei eine weitere Verarbeitung der Daten-Pakete im Ziel-Computersystem am zweiten Standort erfolgt, wenn eine vorbestimmte Bedingung im Ziel-Computersystem am ersten Standort eintritt.

9. Verfahren nach einem der Ansprüche 1 bis 8, wobei im Quell-Computersystem und/oder in der Gruppe der Vermittlungs-Computersysteme die folgenden Schritte durchgeführt werden:
- Aufrufen von Routing-Informationen, die in einem Daten-Paket hinterlegt sind, wobei die Routing-Informationen die vorbestimmte Kommunikationspfad-Struktur zwischen dem Quell-Computersystem, der Gruppe der Vermittlungs-Computersysteme und dem Ziel-Computersystem innerhalb der Computernetz-Infrastruktur definieren, und
- Ausführen der Übertragung an in der Kommunikationspfad-Struktur nachfolgende Computersysteme in Abhängigkeit von den aufgerufenen Routing-Informationen.

10. Verfahren nach einem der Ansprüche 1 bis 9, wobei das Übertragen der Daten-Pakete von einem aus der Gruppe der Vermittlungs-Computersysteme auf das Ziel-Computersystem die folgenden Schritte umfasst:
- Senden einer vorbestimmten Daten-Sequenz vom Vermittlungs-Computersystem an das Ziel-Computersystem, wobei die vorbestimmten Netzwerk-Ports des Ziel-Computersystems geschlossen sind und wobei die Daten-Sequenz in einer vorbestimmten Reihenfolge einen oder mehrere Netzwerk-Ports des Ziel-Computersystems anspricht,
- Überprüfen der gesendeten Daten-Sequenz auf Übereinstimmung mit einer vordefinierten Sequenz im Ziel-Computersystem, sowie
- Veranlassen des Übertragens der Daten-Pakete durch das Ziel-Computersystem, falls die Überprüfung der gesendeten Daten-Sequenz positiv ist.

11. Verfahren nach einem der Ansprüche 1 bis 10, wobei jedes Daten-Paket in wenigstens einem entlang der Kommunikationspfad-Struktur beteiligten Computersystem mit einer innerhalb der Computernetz-Infrastruktur eindeutigen Kennung versehen wird oder eine bereits bestehende Kennung des Daten-Pakets ergänzt wird.

12. Verfahren nach Anspruch 11, wobei der Verlauf der Daten-Pakete entlang der Kommunikationspfad-Struktur über ein Monitoring anhand der Kennung überwacht wird und/oder eine Verweildauer der Daten-Pakete auf einem entlang der Kommunikationspfad-Struktur beteiligten Computersystem überwacht wird und/oder sämtliche Verfahrensschritte durch das Monitoring protokolliert werden.

13. Computernetz-Infrastruktur zumindest umfassend:
- ein Quell-Computersystem,
- ein Ziel-Computersystem und
- eine Gruppe von Vermittlungs-Computersystemen,
wobei die Computersysteme eingerichtet sind, Daten-Pakete entlang einer vorbestimmten Kommunikationspfad-Struktur vom Quell-Computersystem vermittels der Gruppe der Vermittlungs-Computersysteme an das Ziel-Computersystem zu übertragen, wobei die Kommunikationspfad-Struktur eine Mehrzahl von parallelen Teilpfaden umfasst, und
wobei das Quell-Computersystem und das Ziel-Computersystem jeweils eine Zugriffssteuereinheit aufweisen, die eingerichtet ist, vorbestimmte, für dieses Verfahren verwendete Netzwerk-Ports dauerhaft derart geschlossen zu halten, dass kein Verbindungsaufbau zum Quell-Computersystem oder zum Ziel-Computersystem von außen zugelassen wird und somit ein Zugriff über ein Netzwerk vermittels dieser Netzwerk-Ports dauerhaft verhindert ist, und
wobei das Quell-Computersystem oder das Ziel-Computersystem eingerichtet sind, eine Verbindung zu einem jeweiligen Vermittlungs-Computersystem aufzubauen, um Daten-Pakete in dem Vermittlungs-Computersystem abzulegen oder von dort abzuholen.

14. Computernetz-Infrastruktur nach Anspruch 13, welche eingerichtet ist, ein Verfahren nach einem der Ansprüche 1 bis 12 durchzuführen.

15. Computerprogramm-Produkt, welches eingerichtet ist, auf mehreren Computersystemen ausgeführt zu werden und welches bei Ausführung ein Verfahren nach einem der Ansprüche 1 bis 12 durchführt.

## Claims

1. Method for forwarding data between secured computer systems in a computer network infrastructure, wherein data packets are transmitted along a predetermined communication path structure from a source computer system to at least one target computer system by means of a group of broker computer systems,
wherein the communication path structure comprises a plurality of parallel sub-paths, and
wherein both the source computer system and the target computer system keep predetermined network ports, used for this method, permanently closed in such a way that a connection establishment from the exterior to the source computer system or to the target computer system is not permitted, and thus access via a network by means of these network ports is permanently prevented while performing the method,
wherein, however, the source computer system or the target computer system can establish a connection to a respective broker computer system in order to store data packets in the broker computer system or to fetch data packets from there.

2. Method according to claim 1, wherein a data packet is transmitted from the source computer system directly to at least two different broker computer systems.

3. Method according to claim 1 or 2, wherein a data packet, after reception by a broker computer system, is transmitted to a plurality of computer systems downstream in the communication path structure.

4. Method according to one of claims 1 to 3, wherein the following steps are performed:
- verifying if a predetermined data packet has already been transmitted to a broker computer system or to the target computer system or is being transferred to there,
- initiating a transmission of the data packet to the corresponding computer system if the above verification step showed that the data packet has not yet been transmitted to the respective computer system or is not yet being transmitted.

5. Method according to claim 4, wherein a predetermined or random time period is used to verify if a predetermined data packet has already been transmitted to the corresponding computer system or is being transmitted to there.

6. Method according to one of claims 1 to 5, wherein the transmission of the data packets within the communication path structure is effected along different, logically separated network paths.

7. Method according to claim 6, wherein the transmission of the data packets within the communication path structure is effected between logically and/or physically separated locations of the involved computer systems.

8. Method according to claim 7, wherein the transmission of the data packets to at least two target computer systems is effected on different locations, wherein a further processing of the data packets is effected in the target computer system at the second location when a predetermined condition in the target computer system at the first location is fulfilled.

9. Method according to one of claims 1 to 8, wherein the following steps are performed in the source computer system and/or in the group of broker computer systems:
- retrieving routing information stored in a data packet, wherein the routing information define the predetermined communication path structure between the source computer system, the group of the broker computer systems and the target computer system within the computer network infrastructure, and
- executing the transmission to computer systems downstream in the communication path structure depending on the retrieved routing information.

10. Method according to one of claims 1 to 9, wherein the transmission of the data packets from one of the group of broker computer systems to the target computer system comprises the following steps:
- sending a predetermined data sequence from the broker computer system to the target computer system, wherein the predetermined network ports of the target computer system are closed and wherein the data sequence addresses one or multiple network ports of the target computer system in a predetermined order,
- verifying the sent data sequence with a predefined sequence in the target computer system, as well as
- causing the transmission of the data packets by the target computer system if the verification of the sent data sequence is positive.

11. Method according to one of claims 1 to 10, wherein each data packet is provided with an identifier unique within the computer network infrastructure in at least one computer system involved along the communication path structure, or an already existing identifier of the data packet is supplemented.

12. Method according to claim 11, wherein the route of the data packets along the communication path structure is monitored using the identifier by a monitoring and/or a residence time of the data packets on a computer system involved along the communication path infrastructure is monitored and/or all method steps are logged by the monitoring.

13. Computer network infrastructure, comprising at least:
- a source computer system,
- a target computer system, and
- a group of broker computer systems,
wherein the computer systems are configured to transmit data packets along a predetermined communication path structure from the source computer system to the target computer system by means of the group of broker computer systems, wherein the communication path structure comprises a plurality of parallel sub-paths, and wherein the source computer system and the target computer system each comprise an access control unit, which is configured to keep predetermined network ports used for this method permanently closed in such a way that a connection establishment from the exterior to the source computer system or to the target computer system is not permitted, and thus access via a network is permanently prevented by means of these network ports, and
wherein the source computer system or the target computer system is configured to establish a connection to a respective broker computer system in order to store data packets in the broker computer system, or to fetch data packets from there.

14. Computer network infrastructure according to claim 13, which is configured to perform a method according to one of claims 1 to 12.

15. Computer program product, which is configured to be executed on multiple computer systems and which, when executed, performs a method according to one of claims 1 to 12.

## Revendications

1. Procédé de transfert de données entre des systèmes informatiques sécurisés dans une infrastructure de réseau informatique, des paquets de données étant transmis par un système informatique source à au moins un système informatique cible au moyen d'un groupe de systèmes informatiques de commutation le long d'une structure de voies de communication prédéterminée,
la structure de voies de communication comprenant une pluralité de voies partielles parallèles, et
aussi bien le système informatique source que le système informatique cible maintenant fermés de manière durable des ports de réseau prédéterminés, utilisés pour ce procédé, de manière à ce qu'aucun établissement de liaison vers le système informatique source ou vers le système informatique cible ne soit permis de l'extérieur et qu'ainsi un accès au moyen de ces ports de réseau par l'intermédiaire d'un réseau soit empêché de manière durable pendant la réalisation du procédé,
le système informatique source ou le système informatique cible pouvant cependant établir une liaison vers un système informatique de commutation respectif afin de stocker des paquets de données dans le système informatique de commutation ou de les y récupérer.

2. Procédé selon la revendication 1, un paquet de données étant transmis directement à au moins deux systèmes informatiques de commutation différents par le système informatique source.

3. Procédé selon la revendication 1 ou 2, un paquet de données, après la réception par un système informatique de commutation, étant transmis à une pluralité de systèmes informatiques suivants dans la structure de voies de communication.

4. Procédé selon l'une quelconque des revendications 1 à 3, les étapes suivantes étant réalisées :
- vérification si un paquet de données prédéterminé a déjà été transmis à un système informatique de commutation ou au système informatique cible ou s'il est actuellement en cours de transmission à ces systèmes,
- initiation d'une transmission du paquet de données au système informatique correspondant au cas où l'étape ci-dessus de la vérification ait donné que le paquet de données n'a pas encore été transmis au système informatique correspondant ou n'est pas encore actuellement en cours de transmission.

5. Procédé selon la revendication 4, un intervalle de temps prédéterminé ou aléatoire étant attendu dans le but de vérifier si un paquet de données prédéterminé a été transmis au système informatique correspondant ou s'il est actuellement en cours de transmission.

6. Procédé selon l'une quelconque des revendications 1 à 5, la transmission des paquets de données à l'intérieur de la structure de voies de communication étant réalisée le long de voies de réseau séparées logiquement les unes des autres.

7. Procédé selon la revendication 6, la transmission des paquets de données à l'intérieur de la structure de voies de communication étant réalisée entre des lieux logiquement et/ou physiquement séparés des systèmes informatiques participant.

8. Procédé selon la revendication 7, la transmission des paquets de données à au moins deux systèmes informatiques cible étant réalisée à deux lieux différents, un traitement supplémentaire des paquets de données dans le système informatique cible étant réalisé au deuxième lieu lorsqu'une condition prédéterminée dans le système informatique cible se produit au premier lieu.

9. Procédé selon l'une quelconque des revendications 1 à 8, les étapes suivantes étant réalisées dans le système informatique source et/ou dans le groupe des systèmes informatiques de commutation :
- appel d'informations de routage qui sont mémorisées dans un paquet de données, les informations de routage définissant la structure de voies de communication prédéterminée entre le système informatique source, le groupe de systèmes informatiques de commutation et le système informatique cible à l'intérieur de l'infrastructure de réseau informatique, et
- exécution, en fonction des informations de routage appelées, de la transmission à des systèmes informatiques suivants dans la structure de voies de communication.

10. Procédé selon l'une quelconque des revendications 1 à 9, la transmission des paquets de données au système informatique cible par un système informatique de commutation provenant du groupe des systèmes informatiques de commutation comprenant les étapes suivantes :
- émission par le système informatique de commutation au système informatique cible d'une séquence de données prédéterminée, les ports de réseau prédéterminés du système informatique cible étant fermés et la séquence de paquets adressant un ou plusieurs ports de réseau du système informatique cible dans un ordre prédéterminé,
- vérification de la séquence de données émise quant à la concordance avec une séquence prédéfinie dans le système informatique cible, et
- incitation à la transmission des paquets de données par le système informatique cible au cas où la vérification de la séquence de données émise soit positive.

11. Procédé selon l'une quelconque des revendications 1 à 10, chaque paquet de données étant prévu d'un identifiant dans au moins un système informatique participant le long de la structure de voies de communication, ou un identifiant déjà existant du paquet de données étant complété.

12. Procédé selon la revendication 11, le déroulement des paquets de données le long de la structure de voies de communication étant surveillé par un monitoring à l'aide de l'identifiant, et/ou une durée de séjour des paquets de données dans un système informatique participant le long de la structure de voies de communication étant surveillée et/ou toutes les étapes du procédé étant enregistrées par le monitoring.

13. Infrastructure de réseau informatique comprenant au moins :
- un système informatique source,
- un système informatique cible, et
- un groupe de systèmes informatiques de commutation, les systèmes informatiques étant configurés pour transmettre des paquets de données du système informatique source au système informatique cible au moyen du groupe de systèmes informatiques de commutation le long d'une structure de voies de communication prédéterminée, la structure de voies de communication comprenant une pluralité de voies partielles parallèles, et
le système informatique source et le système informatique cible présentant respectivement une unité de commande d'accès qui est configurée pour maintenir fermés de manière durable les ports de réseau prédéterminés, utilisés pour ce procédé, de manière à ce qu'aucun établissement de liaison vers le système informatique source ou vers le système informatique cible ne soit permis de l'extérieur et qu'ainsi un accès soit empêché de manière durable au moyen de ces ports de réseau par l'intermédiaire d'un réseau, et
le système informatique source ou le système informatique cible étant configuré pour établir une liaison vers un système informatique de commutation respectif afin de stocker des paquets de données dans le système informatique de commutation ou de les y récupérer.

14. Infrastructure de réseau informatique selon la revendication 13, laquelle est configurée pour réaliser un procédé selon l'une quelconque des revendications 1 à 12.

15. Produit de programme informatique qui est configuré pour être exécuté sur plusieurs systèmes informatiques et qui, en cas d'exécution, réalise un procédé selon l'une quelconque des revendications 1 à 12.
